# EUROPÄISCHE PATENTSCHRIFT

(11) **EP 1 050 647 B1**
(45) Veröffentlichungstag und Bekanntmachung des Hinweises auf die Patenterteilung: **20.04.2005**
(21) Anmeldenummer: 99115869.2
(22) Anmeldetag: 12.08.1999
(51) Int. Cl.: E05C 1/06, B62D 33/02

(54) **Antrieb für einen Riegel eines eingebauten Riegelverschlusses**
Actuator for the bolt of a built-in bolt lock
Actionneur pour le pêne d'un verrou à pêne intégré

(30) Priorität: 04.05.1999 DE 29907917 U
(43) Veröffentlichungstag der Anmeldung: 08.11.2000
(73) Patentinhaber: F. HESTERBERG & SÖHNE GmbH & Co. KG, D-58256 Ennepetal (DE)
(72) Erfinder: Nieland, Friedhelm, 58339 Breckerfeld. (DE); Klein, Claus-Jürgen, 58332 Schwelm. (DE)
(74) Vertreter: Haug, Dietmar, Dipl.-Ing.

(56) Entgegenhaltungen:
- EP-A- 0 066 297
- DE-C- 688 254
- FR-A- 2 098 048
- FR-A- 2 524 051
- US-A- 4 458 940

## Beschreibung

Die Erfindung betrifft einen Antrieb für einen Riegel eines eingebauten Riegelverschlusses gemäß dem Oberbegriff des Patentanspruches 1.

Riegelverschlüsse mit einem Antrieb der vorstehend genannten Art werden bei Nutzfahrzeugen in der Regel nicht außen an den Aufbauten angebracht, sondern in gewisse Teile, wie z.B. Rungen, Bordwandeinfassungen oder Wannen, eingebaut. Diese Einbauweise hat zur Folge, daß die Handhabe, mit der der Antrieb für den Riegel betätigt wird, zwar in der Geschlossenstellung bündig im betreffenden Aufbauteil liegt, aber in der Offenstellung von diesem mit einem mehr oder weniger großen Winkel absteht, da es nicht möglich ist, die Handhabe um 180° zu verschwenken. Da es immer wieder vorkommt, daß das Schließen des einen oder anderen Verschlusses vergessen wird, bedeutet dieses Vorstehen in den seitlichen Verkehrsraum neben dem Fahrzeug eine große Gefahr für weitere Verkehrsteilnehmer.

Ein Antrieb für einen Riegel eines eingebauten Riegelverschlusses gemäß dem Oberbegriff des Patentanspruchs 1 ist aus der DE 688 254 C bekannt. Dieser bekannte Riegelverschluß ist für Klappenteile von Luftfahrzeugen bestimmt und weist einen Antrieb auf, bei dem ein mit einem Griff versehener Teil eines ersten Kniehebelgliedes an einem Ende mittels einer ersten Achse an einem Gehäuse angelenkt ist. Eine als zweites Kniehebelglied dienende Blattfeder ist an einem Ende an dem einen Teil des ersten Kniehebelgliedes mittels einer zweiten Achse zwischen der ersten Achse und dem Griff angelenkt. An ihrem anderen Ende ist die Blattfeder ohne feste Achse an dem Riegel angelenkt. Ein anderer Teil des ersten Kniehebelgliedes ist auch mittels der ersten Achse an dem Gehäuse angelenkt und dient als Drücker und gleichzeitig als Mitnehmer des Griffteils. Die beiden Teile des ersten Kniehebelgliedes weisen zwei Anschläge auf, die in der Geschlossenstellung des Verschlusses aneinanderliegen. Durch Druck auf den anderen Teil in einem gewissen Abstand rechts von der ersten Achse wird der andere Teil nach innen bewegt und nimmt dabei über die aneinanderliegenden Anschläge den einen Teil aus dem Gehäuse mit heraus. Das aus dem Gehäuse herausstehende Ende des einen Teils kann nun angefaßt und um die erste Achse weitergedreht werden, während der andere Teil in seiner schrägen Lage verbleibt und die Anschläge unwirksam werden. In der vollständig ausgeklappten Lage steht der eine Teil mit seinem Griff rechtwinklig von dem Gehäuse nach außen ab. Wird der eine Teil wieder in seine Ausgangslage zurückgedreht, nimmt er den anderen Teil mit, sobald die Anschläge wieder aufeinandertreffen.

Aus der FR-A-2524051 ist ein Antrieb für einen Riegel eines eingebauten Riegelverschlusses bekannt, bei dem ein erstes Kniehebelglied aus zwei relativ zueinander drehbaren Teilen besteht, von denen der eine Teil mittels einer ersten Achse an einem Gehäuse angelenkt ist. Ein zweites Kniehebelglied ist mittels einer zweiten Achse an dem anderen Teil angelenkt, der seinerseits mittels einer dritten Achse gelenkig mit dem einen Teil verbunden ist, wobei an dem anderen Teil die dritte Achse zwischen der zweiten Achse und einem als Handhabe ausgebildeten Abschnitt des anderen Teiles des ersten Kniehebelgliedes angeordnet ist. Das zweite Kniehebelglied ist ferner mittels einer vierten Achse an dem Riegel angelenkt. In der Geschlossenstellung des Verschlusses, in der die beiden Teile des ersten Kniehebelgliedes in einer gestreckten gegenseitigen Lage sind, liegt die zweite Achse zwischen der ersten Achse und der dritten Achse. In der Offenstellung des Verschlusses liegen der als Handhabe ausgebildete Abschnitt des anderen Teiles des ersten Kniehebelgliedes und der Riegel übereinander. Der andere Teil ist also um etwa 180° drehbar, wenn der Verschluß aus der Geschlossenstellung in die Offenstellung bewegt wird. Die beiden Teile des ersten Kniehebelgliedes weisen aber keine Anschläge auf, die wirksam werden könnten, um den einen Teil durch den anderen Teil bei einer Drehung des anderen Teils in die eine oder andere Richtung mitzunehmen.

Aufgabe der Erfindung ist es, einen gattungsgemäßen Antrieb für den Riegel eines eingebauten Riegelverschlusses so weiterzubilden, daß die Handhabe eines geöffneten Riegelverschlusses nicht mit einem Winkel vom Fahrzeugaufbau absteht, sondern sich an diesen anlegt, wobei die Handhabe in der Geschlossenstellung des Riegelverschlusses über dem zweiten Kniehebelglied liegt.

Die Aufgabe der Erfindung wird mit den Merkmalen des kennzeichnenden Teiles des Patentanspruches 1 gelöst. Beim Öffnen eines mit einem erfindungsgemäßen Antrieb ausgerüsteten eingebauten Riegelverschlusses durch Betätigen der Handhabe bewegt sich von den beiden Teilen des gehäuseseitigen Kniehebelglies zunächst nur der handhabenseitige Teil, bis die entsprechenden Anschläge in Wirkung kommen, worauf dann das abgewinkelte Kniehebelglied insgesamt weiter bewegt wird. In der Endstellung steht dann das gehäuseseitige Teil dieses Kniehebelglieds aus dem Gehäuse vor, während die Handhabe senkrecht nach unten hängt. Durch entsprechende Wahl der Größe der beiden Teile des gehäuseseitigen Kniehebelglieds kann man dafür sorgen, daß die Handhabe in der Offenstellung ganz nah am Fahzeugaufbau nach unten hängt.

Bei einer bevorzugten Ausführungsform lassen sich die beiden Teile des gehäuseseitigen Kniehebelglieds in etwa rechtwinklig zueinander verschwenken, wobei der Ausdruck "rechtwinklig" nicht im mathematischen Sinn zu verstehen ist und auf jeden Fall Winkel zwischen 70° und -110° einschließen soll.

Gemäß einer andem Weiterbildung ist am direkt am Gehäuse angelenkten Teil des gehäuseseitigen Kniehebelglieds ein Anschlag vorgesehen, der in der Geschlossenstellung des Verschlusses am Boden des Gehäuses anliegt. Dadurch wird eine stabile gestreckte Lage dieses Kniehebelglieds in der Geschlossenstellung erreicht.

Schließlich wird es auch bevorzugt, daß in der Geschlossenstellung sich das Kniegelenk bezüglich der beiden Anlenkstellen des Kniehebels am Gehäuse bzw. am Riegel in einer Übertotpunktlage befindet, um die Geschlossenstellung zu stabilisieren, wie dies bei Verschlüssen dieser Art an und für sich üblich ist.

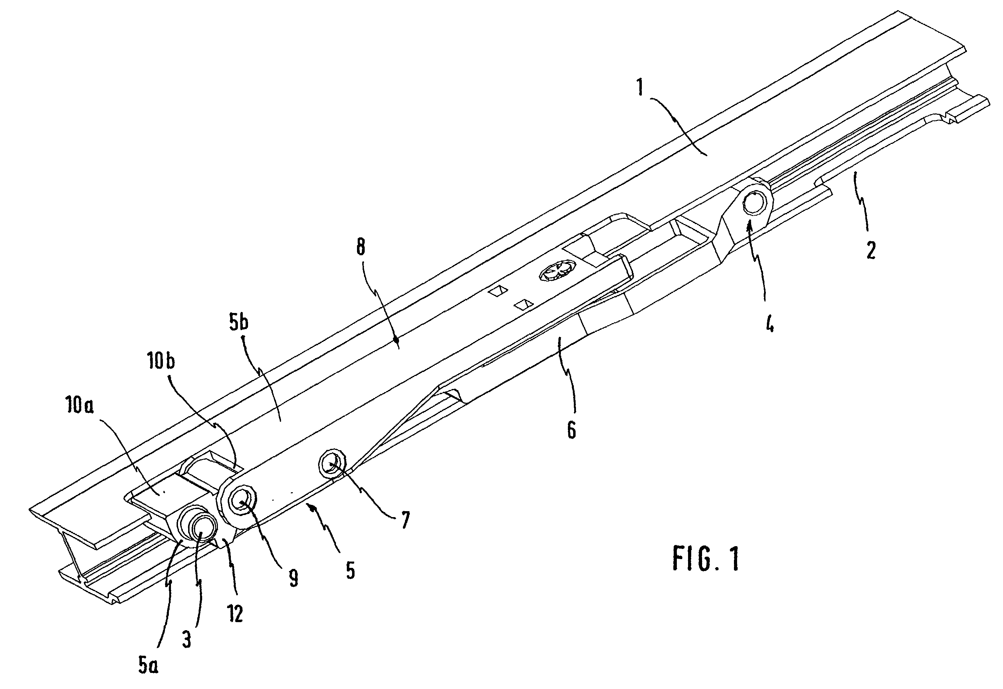

Eine Ausführungsform eines erfindungsgemäßen Antriebs für den Riegel eines eingebauten Riegelverschlusses wird nachstehend anhand der beigefügten Zeichnungen näher erläutert. In diesen zeigen:
- Fig. 1: einen in eine seitliche Einfassung einer Bordwand eines Nutzfahrzeugs eingebauten erfindungsgäßen Riegelantrieb in der Geschlossenstellung des Verschlusses, wobei die Einfassung der Länge nach aufgeschnitten ist;
- Fig. 2: eine ähnliche Ansicht wie Fig. 1 in einer mittleren Öffnungsstellung;
- Fig. 3: eine ähnliche Ansicht wie Fig. 1 in der vollen Offenstellung; und
- Fig. 4: eine ähnliche Ansicht wie Fig. 2, jedoch unter einem anderen Blickwinkel.
Gemäß den Zeichnungen ist ein erfindungsgemäßer Riegelantrieb in eine übliche, aus strangepreßtem Aluminium bestehende seitliche Bordwandeinfassung 1 integriert. An ihrem oberen Ende besitzt die Einfassung 1 eine Ausnehmung 2 in die in der hochgeklappten Stellung der Bordwand ein an einem festen Aufbauteil befestigter Gegenhalter für einen (nicht dargestellten) Riegel hineinragt. Der Antrieb für den Riegel besteht aus einem Kniehebel 5,6 der einerseits mittels einer Achse 3 an der Einfassung 1 und andererseits mittels einer nicht dargestellten Achse (bei 4) am ebenfalls nicht dargestellten Riegel angelenkt ist. Die beiden Kniehebelglieder 5 und 6 sind mittels einer Kniegelenkachse 7 miteinander verbunden. Das gehäuseseitige Kniehebelglied 5 ist über die Achse 7 hinaus verlängert und dort als Handhabe 8 ausgebildet. Wie aus Fig. 1 ersichtlich ist, befindet sich in der Geschlossenstellung die Kniegelenkachse 7 bezüglich der beiden Anlenkachsen 3 und 4 des Kniehebels 5,6 in einer Übertotpunktlage, wodurch die Geschlossenstellung der Handhabe 8 fixiert wird.

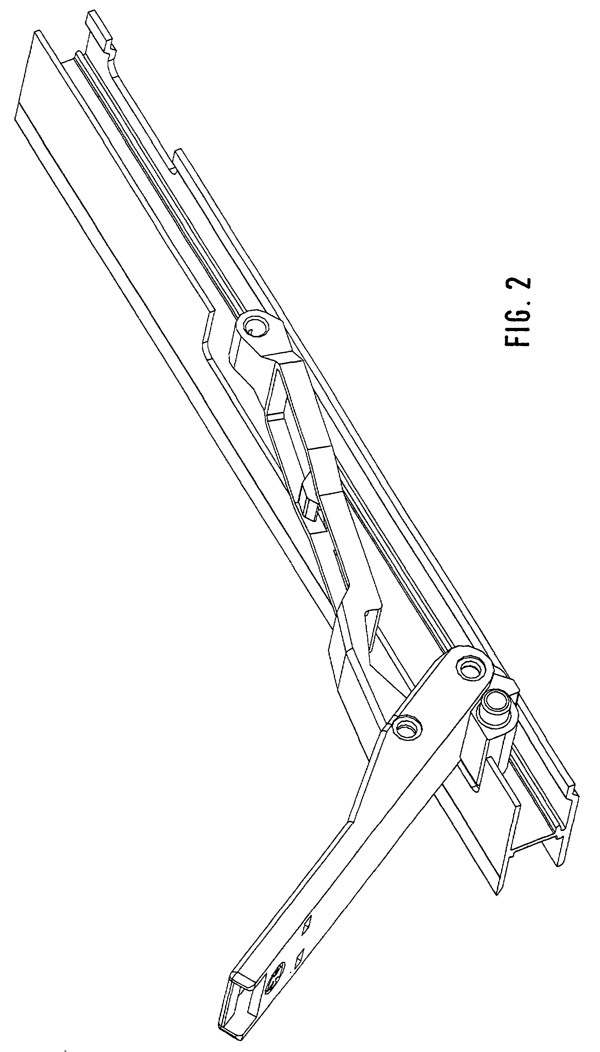

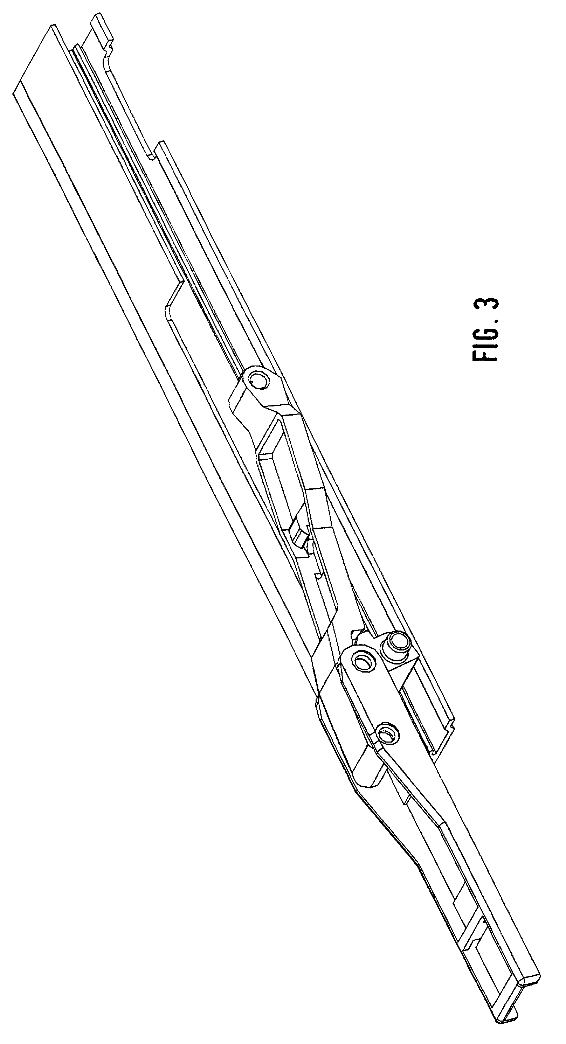

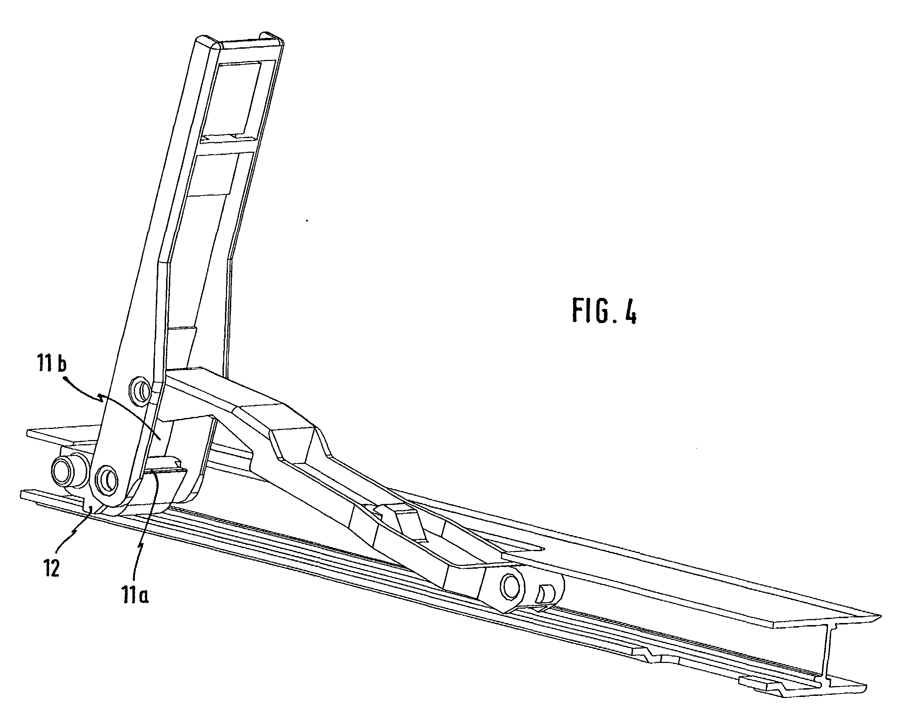

Das gehäuseseitige Kniehebelglied 5 ist in zwei Teile 5a und 5b unterteilt, welche mittels einer Achse 9 gelenkig miteinander verbunden sind. Zwei Anschlagflächen 10a und 10b auf den beiden Teilen 5a bzw. 5b des gehäuseseitigen Kniehebelglieds 5 sind so angeordnet, daß ein gegenseitiges Verschwenken der beiden Teile 5a und 5b bis zu der in Fig. 2 gezeigten gegenseitigen Lage möglich ist, wenn die Handhabe 8 ausgeschwenkt wird. Durch weiteres Verschwenken der Handhabe 8 wird dann das abgewinkelte gehäuseseitige Kniehebelglied 5 als Einheit weiterverschwenkt, bis die in Fig. 3 gezeigte Lage erreicht ist. In dieser Lage hangt die Handhabe 8 unmittelbar vor der Einfassung 1 senkrecht nach unten. Beim Schließen des Handhebels 8 verschwenkt das handhabenseitige Teil 5b aus der in Fig. 3 gezeigten Lage zunächst um die Verbindungsachse 9 der beiden Teile 5a und 5b, bis diese eine gestreckte Lage zueinander einnehmen. In dieser Lage befinden sich zwei Anschlagflächen 11a und 11b auf den beiden Teilen 5a bzw. 5b in Anlage (siehe Fig. 4), so daß sich die beiden Teile 5a und 5b des gehäuseseitigen Kniehebelglieds 5 in gestreckter Lage gemeinsam weiterbewegen, bis wieder die in Fig. 1 dargestellte Ausgangslage erreicht ist.

Zur weiteren Stabilisierung dieser Lage weist das gehäuseseitige Teil 5a des Kniehebelglieds 5 einen weiteren Anschlag 12 auf, der in der Geschlossenstellung des Verschlusses am Boden der Einfassung 1 anliegt.

Selbstverständlich besitzt der gezeigte Verschluß auch noch weitere übliche Teile, die nicht dargestellt sind, da sie zum Verständnis der Erfindung nicht erforderlich sind. Beispielsweise besitzt er eine Arretierung für die Handhabe 8 in der Geschlossenstellung, die aus einem in die Handhabe 8 integrierten und über diese vorspringenden federbelasteten Schieber mit einem Haken besteht, der sich in der Geschlossenstellung an einem Haken (siehe Fig. 2) am riegelseitigen Kniehebelglied 5b verhakt.

## Patentansprüche

1. Antrieb für einen Riegel eines eingebauten Riegelverschlusses, mit einem Kniehebel (5, 6), der ein erstes mittels einer ersten Achse (3) an einem Gehäuse (1) anlenkbares Kniehebelglied (5) und ein zweites an einem Riegel anlenkbares Kniehebelglied (6) aufweist, das an dem ersten Kniehebelglied (5) mittels einer zweiten Achse (7) angelenkt ist, wobei das erste Kniehebelglied (5) über die zweite Achse (7) hinaus verlängert und dort als Handhabe (8) ausgebildet ist, wobei das erste Kniehebelglied (5) aus zwei relativ zueinander drehbaren Teilen (5a, 5b) besteht, an denen zur Begrenzung der Relativdrehung der beiden Teile (5a, 5b) in beiden Richtungen Anschläge (10a, 10b; 11a, 11b) vorgesehen sind, von denen ein erstes Paar Anschläge (10a, 10b) in einer abgewinkelten gegenseitigen Lage der beiden Teile (5a, 5b) aneinander liegen und ein zweites Paar Anschläge (11a, 11b) in der gestreckten gegenseitigen Lage der beiden Teile (5a, 5b) aneinander liegen , **dadurch gekennzeichnet, daß** der eine Teil (5a) mittels der ersten Achse (3) an dem Gehäuse (1) anlenkbar und mittels einer dritten Achse (9) gelenkig mit dem anderen Teil (5b) verbunden ist, die dritte Achse (9) zwischen der ersten Achse (3) und der zweiten Achse (7) liegt, wenn sich die beiden Teile (5a, 5b) in einer gestreckten gegenseitigen Lage befinden, so daß beim Öffnen sowie beim Schließen der Handhabe (8), wenn die Anschläge (10a, 10b; 11a, 11b) in der abgewinkelten bzw. in der gestreckten gegenseitigen Lage der beiden Teile (5a, 5b) aneinander liegen, die beiden Teile (5a, 5b) sich gemeinsam weiterbewegen.

2. Antrieb nach Anspruch 1, **dadurch gekennzeichnet, daß** das erste Paar Anschläge (10a, 10b) in einer etwa rechtwinkligen gegenseitigen Lage der beiden Teile (5a, 5b) des ersten Kniehebelglieds (5) wirksam sind.

3. Antrieb nach Anspruch 1 oder 2, **dadurch gekennzeichnet, daß** der am Gehäuse (1) anlenkbare eine Teil (5a) des ersten Kniehebelgliedes (5) einen weiteren Anschlag (12) aufweist, der in der Geschlossenstellung des Verschlusses am Boden des Gehäuses (1) anliegt.

4. Antrieb nach einem der Ansprüche 1, 2 oder 3, **dadurch gekennzeichnet, daß** in der Geschlossenstellung des Verschlusses sich die zweite Achse (7) bezüglich der ersten Achse (3) und einer vierten Achse (4), mittels der das zweite Kniehebelglied (6) an dem Riegel anlenkbar ist, in einer Übertotpunktlage befindet.

## Claims

1. An actuator for a bolt of a built-in bolt lock, with a toggle lever (5, 6) comprising a first toggle lever member (5) pivotable on a housing (1) by means of a first spindle (3), and a second toggle lever member (6) pivotable on a bolt and pivoted on the first toggle lever member (5) by means of a second spindle (7), the first toggle lever member (5) being extended beyond the second spindle (7) where it is constructed as a handle (8), the first toggle lever member (5) consisting of two parts (5a, 5b) which are rotatable relatively to one another and on which there are provided stops (10a, 10b; 11a, 11b) to limit the relative rotation of the two parts (5a, 5b) in both directions, a first pair of said stops (10a, 10b) bearing against one another when the two parts (5a, 5b) are in a position in which they are at an angle to one another while a second pair of stops (11a, 11b) bear against one another when the two parts (5a, 5b) are in the straight position relative to one another, **characterised in that** the one part (5a) is pivotable on the housing (1) by means of the first spindle (3) and is pivotally connected to the other part (5b) by means of a third spindle (9), the third spindle (9) is situated between the first spindle (3) and the second spindle (7) when the two parts (5a, 5b) are in a position in which they are straight relative to one another so that on opening and on closing of the handle (8) the two parts (5a, 5b) move on jointly when the stops (10a, 10b; 11a, 11b) bear on one another when the two parts (5a, 5b) are in the angled or straight position relative to one another.

2. An actuator according to claim 1, **characterised in that** the first pair of stops (10a, 10b) are operative when the two parts (5a, 5b) of the first toggle lever member (5) are in a position approximately at right angles to one another.

3. An actuator according to claim 1 or 2, **characterised in that** the one part (5a) of the first toggle lever member (5) pivotable on the housing (1) comprises another stop (12) which in the closed position of the lock bears against the base of the housing (1).

4. An actuator according to any one of claims 1, 2 or 3, **characterised in that** in the closed position of the lock the second spindle (7) is in an over dead centre position with respect to the first spindle (3) and a fourth spindle (4) by means of which the second toggle lever member (6) is pivotable on the bolt.

## Revendications

1. Entraînement pour un verrou d'une fermeture à verrou intégrée, avec une genouillère (5, 6) qui présente un premier élément de genouillère (5) pouvant être articulé sur un boîtier (1) au moyen d'un premier axe (3) et un deuxième élément de genouillère (6) pouvant être articulé sur un verrou et qui est articulé sur le premier élément de genouillère (5) au moyen d'un deuxième axe (7), le premier élément de genouillère (5) étant prolongé au-delà du deuxième axe (7) et conçu comme une manette (8), le premier élément de genouillère (5) étant composé de deux parties pouvant tourner relativement l'une à l'autre (5a, 5b) sur lesquelles, pour limiter la rotation relative des deux parties (5a, 5b) dans les deux directions, des butées (10a, 10b ; 11a, 11b) sont prévues, dont les butées d'un premier couple (10a, 10b) reposent l'une contre l'autre dans une position réciproque en angle droit des deux parties (5a, 5b) et les butées d'un deuxième couple (11a, 11b) reposent l'une contre l'autre dans la position réciproque étendue des deux parties (5a, 5b), **caractérisé en ce qu'**une partie (5a) peut être articulée au boîtier (1) au moyen du premier axe (3) et est reliée de manière articulée à l'autre partie (5b) au moyen d'un troisième axe (9), le troisième axe (9) étant situé entre le premier axe (3) et le deuxième axe (7) lorsque les deux parties (5a, 5b) se trouvent dans une position réciproque étendue, de sorte que, lors de l'ouverture ainsi que lors de la fermeture de la manette (8), lorsque les butées (10a, 10b ; 11a, 11b) reposent l'une contre l'autre dans la position en angle ou étendue des deux parties (5a, 5b), les deux parties continuent de se déplacer ensemble.

2. Entraînement selon la revendication 1, **caractérisé en ce que** les butées du premier couple (10a, 10b) sont actives dans une première position réciproque à peu près perpendiculaire des deux parties (5a, 5b) du premier élément de genouillère (5).

3. Entraînement selon la revendication 1 ou 2, **caractérisé en ce que** la partie (5a) du premier élément de genouillère (5) pouvant être articulée sur le boîtier (1) présente une autre butée (12) qui repose au fond du boîtier (1) dans la position de fermeture de la fermeture.

4. Entraînement selon l'une des revendications 1, 2 ou 3, **caractérisé en ce que**, dans la position de fermeture de la fermeture, le deuxième axe (7) se trouve dans une position dépassant le point mort par rapport au premier axe (3) et à un quatrième axe (4), au moyen duquel le deuxième élément de genouillère (6) peut être articulé sur le verrou.
